(19)

**Europäisches Patentamt**

**European Patent Office**

**Office européen des brevets**

(11) **EP 4 417 296 A1**

(12) **EUROPEAN PATENT APPLICATION**
published in accordance with Art. 153(4) EPC

(43) Date of publication:
**21.08.2024 Bulletin 2024/34**

(21) Application number: **22880689.9**

(22) Date of filing: **09.09.2022**

(51) International Patent Classification (IPC):
**B01D 53/14** (2006.01)     **B01D 53/18** (2006.01)
**B01D 53/62** (2006.01)     **B01D 53/78** (2006.01)
**C08G 63/12** (2006.01)     **C08G 64/00** (2006.01)
**C08G 65/04** (2006.01)     **C08G 65/08** (2006.01)

(52) Cooperative Patent Classification (CPC):
**B01D 53/14; B01D 53/18; B01D 53/62;**
**B01D 53/78; C08G 63/12; C08G 64/00;**
**C08G 65/04; C08G 65/08;** Y02C 20/40

(86) International application number:
**PCT/JP2022/033938**

(87) International publication number:
**WO 2023/062993 (20.04.2023 Gazette 2023/16)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **12.10.2021   JP 2021167560**
               **22.02.2022   JP 2022025856**

(71) Applicant: **AGC INC.**
**Chiyoda-ku,**
**Tokyo 1008405 (JP)**

(72) Inventors:
• **KOGUCHI, Ryohei**
  **Tokyo 100-8405 (JP)**
• **SUZUKI, Toyokazu**
  **Tokyo 100-8405 (JP)**
• **FUJISAKI, Shogo**
  **Tokyo 100-8405 (JP)**
• **ARAI, Takeaki**
  **Tokyo 100-8405 (JP)**
• **SUZUKI, Chitoshi**
  **Tokyo 100-8405 (JP)**

(74) Representative: **Müller-Boré & Partner**
**Patentanwälte PartG mbB**
**Friedenheimer Brücke 21**
**80639 München (DE)**

(54) **ACIDIC GAS REMOVING AGENT, ACIDIC GAS REMOVING METHOD, ABSORPTION DEVICE PROVIDED WITH ACIDIC GAS REMOVING AGENT, AND ACIDIC GAS CLEANING DEVICE**

(57)    Provided are, an acidic gas removing agent with smaller variation in amounts of carbon dioxide absorption even in the coexistence of water in removing carbon dioxide in a gas; an acidic gas removing method; an absorption device provided with the acidic gas removing agent; and an acidic gas cleaning device. Used is an acidic gas removing agent comprising one or more selected from the group consisting of a hydroxy group-containing compound having a number-average molecular weight of 500 or more and a derivative of the hydroxy group-containing compound.

**Description**

Technical Field

The present invention relates to an acidic gas removing agent that removes an acidic gas, in particular, carbon dioxide in a gas through a physical absorption method.

Background Art

The present invention is applied for recovering an acidic gas, in particular, carbon dioxide from a gas at a pressure equal to or higher than the atmospheric pressure. This gas is generally a synthesis gas produced through gasification of coal or reforming of natural gas.

Carbon dioxide constitutes greenhouse gases, which are thought to be a cause of the global warming. As can be seen from the effectuation of the Kyoto Protocol, reducing emissions of carbon dioxide in the atmosphere has been demanded in the industry as well as in terms of the social context.

Capturing and storing carbon dioxide in places where huge amounts of carbon dioxide are generated such as large-scale power plants and heavy industries is one of most promising means to achieve the goal for greenhouse gas emission reduction in the Kyoto Protocol on a global scale.

A physical absorption method and a chemical absorption method are known as industrial methods for capturing carbon dioxide. The chemical absorption method is a method of absorbing and capturing carbon dioxide through chemical reaction, and uses an acidic gas removing agent under low pressure (normal pressure). The physical absorption method is a method of absorbing and capturing carbon dioxide under high pressure, and uses an acidic gas removing agent under high pressure. For the acidic gas removing agent to be used in the physical absorption method, liquids capable of physically dissolving carbon dioxide are used. Carbon dioxide becomes more soluble in a liquid and the amount of carbon dioxide absorption in the liquid increases as the partial pressure of carbon dioxide increases, and hence the physical absorption method is particularly suitable for high-pressure processes.

For example, PTL1 discloses use of polyethylene glycol dimethyl ether as an acidic gas removing agent.

Citation List

Patent Literature

PTL1: JP 59-216831 A

Summary of Invention

Technical Problem

However, conventional acidic gas removing agents as disclosed in PTL1 tend to give reduced amounts of carbon dioxide absorption in the coexistence of water. Water vapor may be involved in actual industrial processes, and thus an acidic gas removing agent with smaller variation in amounts of carbon dioxide absorption even in the coexistence of water has been demanded.

The present invention has been made to solve such a problem, and provides an acidic gas removing agent with smaller variation in amounts of carbon dioxide absorption even in the coexistence of water in removing carbon dioxide in a gas; an acidic gas removing method; an absorption device provided with the acidic gas removing agent; and an acidic gas cleaning device.

Solution to Problem

The present invention is [1] to [11] in the following.

[1] An acidic gas removing agent for removing carbon dioxide in a gas, the acidic gas removing agent comprising one or more selected from the group consisting of a hydroxy group-containing compound having a number-average molecular weight of 500 or more and a derivative of the hydroxy group-containing compound.

[2] The acidic gas removing agent according to [1], wherein the hydroxy group-containing compound and the derivative of the hydroxy group-containing compound each have a number-average molecular weight of 500 to 30,000.

[3] The acidic gas removing agent according to [1] or [2], wherein the hydroxy group-containing compound is polyether monool, polyether polyol, polyester polyol, or polycarbonate diol.

[4] The acidic gas removing agent according to any of [1] to [3], having a partition coefficient of 0 or more.

[5] The acidic gas removing agent according to any of [1] to [4], wherein the gas comprises nitrogen.

[6] The acidic gas removing agent according to any of [1] to [5], wherein the gas comprises water.

[7] An acidic gas removing method, wherein the acidic gas removing agent according to any of [1] to [6] is brought into contact with the gas to remove carbon dioxide in the gas.

[8] The acidic gas removing method according to [7], wherein the acidic gas removing agent is brought into contact with the gas at a temperature ranging from 0 to 200°C.

[9] The acidic gas removing method according to [7] or [8], wherein the acidic gas removing agent is brought into contact with the gas at a pressure ranging from 0.7 to 7.0 MPa.

[10] An absorption device packed with the acidic gas removing agent according to any of [1] to [6].

[11] An acidic gas cleaning device provided with the absorption device according to [10].

Advantageous Effects of Invention

The present invention provides an acidic gas removing agent with smaller variation in amounts of carbon dioxide absorption even in the coexistence of water in removing carbon dioxide in a gas, and an acidic gas removing method using the acidic gas removing agent.

The acidic gas removing agent of the present invention is useful for removing carbon dioxide in a gas that is emitted from a thermal power plant or the like and contains a huge amount of carbon dioxide and water vapor.

Description of Embodiments

The meanings and definitions of terms in the present specification are as follows.

"Removing carbon dioxide in a gas" means not only the case that carbon dioxide in a gas is removed and the carbon dioxide concentration of the gas reaches 0 vol%, but also the case that the carbon dioxide concentration of a gas is reduced.

The term "hydroxy group-containing compound" is a collective term for compounds having at least one hydroxy group in one molecule.

A "derivative of a hydroxy group-containing compound" is a product formed through esterification, etherification, amidation, or urethanization of some or all of the hydroxy groups of a hydroxy group-containing compound.

Each numerical range expressed with "to" is such a numerical range that the numerical values before and after "to" are the lower limit value and the upper limit value, respectively.

A "partition coefficient (C (log P))" is an n-octanol/water partition coefficient and a parameter indicating the hydrophilicity/hydrophobicity of a compound. Herein, calculated values given by ChemDraw Professional Ver. 17.1 software package at 25°C are used therefor. For a mixture, the partition coefficient of each compound as a mixed component is multiplied by the mole fraction in the mixture, and the total of the products can be used as the partition coefficient of the mixture.

Viscosity is a value determined at 25°C in accordance with JIS K1557-5:2007 using an E-type viscometer.

The number-average molecular weight of a hydroxy group-containing compound is a molecular weight in terms of hydroxyl value. The molecular weight in terms of hydroxyl value is a molecular weight calculated from the expression 56,100 / (hydroxyl value of hydroxy group-containing compound) × (number of terminal groups in hydroxy group-containing compound), wherein the hydroxyl value of a hydroxy group-containing compound is calculated in accordance with JIS K 1557-1:2007.

The number-average molecular weight of a derivative of a hydroxy group-containing compound is a molecular weight determined through gel permeation chromatography (GPC) using polystyrene as standards.

[Acidic gas removing agent]

The acidic gas removing agent of the present invention is an acidic gas removing agent for removing carbon dioxide in a gas, and characterized by containing one or more selected from the group consisting of a hydroxy group-containing compound having a number-average molecular weight of 500 or more and a derivative of the hydroxy group-containing compound. The acidic gas removing agent can give smaller variation in amounts of carbon dioxide absorption even if water is coexisting in a gas.

Examples of the hydroxy group-containing compound having a number-average molecular weight of 500 or more include polyether monool, polyether polyol, polyester polyol, polycarbonate diol, and polyether polycarbonate polyol.

Examples of the polyether monool include polyoxyalkylene monool.

Examples of the polyether polyol include polyethylene glycol, polypropylene glycol, polyoxyethylenepolyoxypropylene glycol, polyoxytetramethylene glycol, and addition polymer of polyoxytetramethylene glycol and alkylene oxide.

Examples of the polyester polyol include polyester polyol consisting of a condensate of a dibasic acid and an alcohol having two or more hydroxy groups, and polycaprolactone polyol, which is a ring-opened polymer of a cyclic ester compound.

Examples of the polycarbonate diol include condensates of an alcohol having two hydroxy groups and a carbonate compound, and reaction products of an alcohol having two hydroxy groups, together with a cyclic ester, and a carbonate compound.

Examples of the polyether polycarbonate polyol include condensates of polyether diol and a carbonate compound, reaction products of polyether polyol having three or more hydroxy groups, alkylene oxide, and carbon dioxide, and addition polymers of polycarbonate diol and alkylene oxide.

For the hydroxy group-containing compound, one of those may be used singly; otherwise, two or more thereof may be used in combination. Among them, polyether monool, polyether polyol, polyester polyol, and polycarbonate diol are preferable for availability, polyether monool, polyether polyol, and polycarbonate diol are more preferable, polyether polyol is even more preferable, and polypropylene glycol is furthermore preferable.

Preferable as the polyether monool is a product obtained by subjecting a cyclic ether to ring-opening addition polymerization reaction with an initiator having one active hydrogen atom in one molecule. Preferable as the polyether polyol is a product obtained by subjecting a cyclic ether to ring-opening addition polymerization reaction with an initiator having at least two active hydrogen atoms in one molecule.

The initiator to be used for producing polyether monool is a compound having one active hydrogen atom in one molecule. Such a group containing an active hydrogen atom is preferably a hydroxy group. Specific examples of the initiator include monohydric alcohols such as methanol, ethanol, 2-propanol, n-butanol, isobutanol, 2-ethylhexanol, decyl alcohol, lauryl alcohol, tridecanol, cetyl alcohol, stearyl alcohol, and oleyl alcohol. For the initiator, one of those may be used singly; otherwise, two or more thereof may be used in combination.

The initiator to be used for producing polyether polyol is a compound having at least two active hydrogen atoms in one molecule. Such a group containing an active hydrogen atom is preferably a hydroxy group. Specific examples of the initiator include water and diols such as ethylene glycol, diethylene glycol, propylene glycol, dipropylene glycol, 1,3-propanediol, 1,3-butanediol, 1,4-butanediol, 1,6-hexanediol, 1,4-cyclohexanediol, bisphenol A, bisphenol F, bisphenol S, and resorcin; and trihydric or higher alcohols such as glycerin, diglycerin, trimethylolpropane, pentaerythritol, dipentaerythritol, tripentaerythritol glucose, sorbitol, dextrose, fructose, sucrose, methylglucoside, trehalose, novolac, resole, and castor oil. For the initiator, one of those may be used singly; otherwise, two or more thereof may be used in combination.

The cyclic ether to be used for producing polyether monool or polyether polyol is preferably an organic compound having 2 to 20 carbon atoms with cyclic ether structure. Examples of the organic compound having 2 to 20 carbon atoms with cyclic ether structure include compounds having an epoxy group such as ethylene oxide, propylene oxide, 1,2-butylene oxide, 2,3-butylene oxide, $\alpha$-olefin oxide having 5 to 20 carbon atoms, styrene oxide, cyclopentene oxide, cyclohexene oxide, epichlorohydrin, glycidyl alkyl ether, and glycidyl alkyl ester; oxetane, and tetrahydrofuran. The cyclic ether to be used for producing polyether monool or polyether polyol is preferably ethylene oxide or propylene oxide, and more preferably propylene oxide. For the cyclic ether to be used for producing polyether monool or polyether polyol, one of those may be used singly; otherwise, two or more thereof may be used in combination.

The ring-opening addition polymerization reaction of the cyclic ether is preferably performed with use of a catalyst, and examples of the catalyst include composite metal cyanide complex catalysts; alkaline catalysts such as sodium hydroxide, potassium hydroxide, and cesium hydroxide; Ziegler-Natta catalysts constituted with an organoaluminum compound and a transition metal compound; metal porphyrin catalysts, which are complexes obtained by reacting porphyrin; phosphazene catalysts; imino group-containing phosphazenium salts; tris(pentafluorophenyl)borane; catalysts constituted with a metal salen complex; and catalysts constituted with reduced Robson-type macrocyclic ligands. For the catalyst, one of those may be used singly; otherwise, two or more thereof may be used in combination.

For production of polyether monool or polyether polyol by ring-opening addition polymerization with a catalyst, production conditions described in, for example, WO 2003/062301, WO 2004/067633, JP 2004-269776 A, JP 2005-15786 A, WO 2013/065802, or JP 2015-10162 A can be employed.

Preferable as the polyester polyol is a product obtained by subjecting a dibasic acid component or a dialkyl ester of a dibasic acid component and an alcohol to esterification reaction or transesterification reaction. A known method can be applied to the esterification reaction or transesterification reaction for producing polyester polyol.

Examples of the dibasic acid component or the dialkyl ester of a dibasic acid component include aliphatic dibasic acids such as succinic acid, glutaric acid, adipic acid, pimelic acid, suberic acid, azelaic acid, sebacic acid, dodecanedioic acid, brassylic acid, and dimer acid or dialkyl esters of these aliphatic dibasic acids such as dimethyl esters, diethyl esters, dipropyl esters, and dibutyl esters thereof; alicyclic dicarboxylic acids such as 1,4-cyclohexanedicarboxylic acid or dialkyl esters of these alicyclic dicarboxylic acids such as dimethyl esters, diethyl esters, dipropyl esters, and dibutyl esters thereof; and aromatic dibasic acids such as phthalic acid, isophthalic acid, terephthalic acid, and naphthalenedicarboxylic acid or dialkyl esters of these aromatic dibasic acids such as dimethyl esters, diethyl esters, dipropyl esters, and dibutyl esters thereof.

Examples of the alcohol to be used for producing polyester polyol include diols such as ethylene glycol, diethylene glycol, propylene glycol, dipropylene glycol, triethylene glycol, tripropylene glycol, neopentyl glycol, 1,4-butanediol, and 1,6-hexanediol; and trihydric or higher alcohols such as glycerin, trimethylolpropane, trimethylolethane, pentaerythritol, sorbitol, and sucrose.

The esterification reaction or transesterification reaction for producing polyester polyol is preferably performed in the presence of a catalyst. Examples of the catalyst include titanium compounds such as tetrabutyl titanate, tetraisopropyl titanate, tetra-2-ethylhexyl titanate, and titanium acetylacetonate; tin compounds such as dibutyltin oxide, methylphenyltin oxide, and hexaethyltin oxide; and magnesium compounds such as magnesium carbonate, magnesium oxide, and magnesium alkoxide. Among them, titanium compounds are preferable, and tetrabutyl titanate and titanium acetylacetonate are more preferable. For the catalyst, one of those may be used singly; otherwise, two or more thereof may be used in combination.

Examples of polycarbonate diol include condensates of an alcohol and a carbonate component, and reaction products of an alcohol, together with a cyclic ester, and a carbonate compound.

Examples of the alcohol to be used for producing polycarbonate diol include diols. Specific examples of the diols include noncyclic aliphatic diols having no side chain such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol, and 1,20-eicosanediol; noncyclic aliphatic diols having a side chain such as 2-methyl-1,8-octanediol, 2,2-dimethyl-1,3-propanediol, 2-ethyl-1,3-hexanediol, 2-ethyl-1,6-hexanediol, 2-methyl-1,4-butanediol, 2-methyl-1,3-propanediol, 3-methyl-1,5-pentanediol, 2,4-dimethyl-1,5-pentanediol, and 2,4-diethyl-1,5-pentanediol; cyclic aliphatic diols such as 1,3-cyclohexanediol, 1,3-cyclohexanedimethanol, 1,4-cyclohexanediol, 1,4-cyclohexanedimethanol, isosorbide, 2-bis(4-hydroxycyclohexyl)-propane, 2,7-norbornanediol, 2,3-norbornanediol, tetrahydrofuran-2,2-dimethanol, and 2,5-bis(hydroxymethyl)-1,4-dioxane; and aromatic diols such as 5,5-bis(hydroxymethyl)-2-phenyl-1,3-dioxane, p-xylene glycol, p-tetrachloroxylenediol, 1,4-bis(hydroxyethoxy)benzene, and 2,2-bis[(4-hydroxyethoxy)phenyl]propane. For the alcohol, one of those may be used singly; otherwise, two or more thereof may be used in combination.

Examples of the carbonate compound to be used for producing polycarbonate diol include dimethyl carbonate, diethyl carbonate, dipropyl carbonate, dibutyl carbonate, diphenyl carbonate, ethylene carbonate, trimethylene carbonate, propylene carbonate, 1,2-butylene carbonate, and neopentylene carbonate. Among them, dimethyl carbonate, diethyl carbonate, diphenyl carbonate, and ethylene carbonate are preferable for easiness in reaction with the alcohol and the cyclic ester. For the carbonate compound, one of those may be used singly; otherwise, two or more thereof may be used in combination.

Examples of the cyclic ester to be used for producing polycarbonate diol include ε-caprolactone, β-propiolactone, β-methyl-β-propiolactone, δ-valerolactone, glycolide, and lactide. Among them, ε-caprolactone is preferable. For the cyclic ester, one of those may be used singly; otherwise, two or more thereof may be used in combination.

Production of polycarbonate diol can be performed by applying a method described in, for example, JP 2012-77280 A, JP 2014-080590 A, JP 2015-91937 A, JP 2001-270938 A, JP 2010-126591 A, JP H02-289616 A, or JP H4-239023 A.

The number-average molecular weight of the hydroxy group-containing compound to be used for the acidic gas removing agent of the present invention is 500 or more, preferably 500 to 30,000, more preferably 700 to 20,000, and particularly preferably 1,000 to 15,000. The number-average molecular weight being 500 or more leads to a tendency to show a higher partition coefficient, allows easy separation from water, and gives higher carbon dioxide absorption ratios, without causing reduction in amounts of carbon dioxide absorption even in the presence of water.

Examples of the derivative of a hydroxy group-containing compound having a number-average molecular weight of 500 or more include derivatives of the hydroxy group-containing compound shown above. As described above, a derivative of a hydroxy group-containing compound is a product formed through esterification, etherification, amidation, or urethanization of some or all of the hydroxy groups of the hydroxy group-containing compound. For the esterification, etherification, amidation, or urethanization of some or all of the hydroxy groups of a hydroxy group-containing compound, a common method that is used for esterification reaction, etherification reaction, amidation reaction, or urethanization reaction can be applied.

Preferable as the derivative of a hydroxy group-containing compound is a derivative of polyether monool, polyether polyol, polyester polyol, or polycarbonate diol, and more preferable is a derivative of polyether monool.

Preferable as the derivative of polyether monool are methyl ether of polyether monool and ethyl ether of polyether monool, and more preferable is methyl ether of polyether monool.

The number-average molecular weight of the derivative of a hydroxy group-containing compound is preferably 500 or more, more preferably 500 to 30,000, and even more preferably 700 to 20,000. The number-average molecular weight being equal to or more than the lower limit value leads to a tendency to show a higher partition coefficient, allows easy separation from water, and gives higher carbon dioxide absorption ratios, without causing reduction in amounts of carbon dioxide absorption even in the presence of water. The number-average molecular weight being equal to or less than the upper limit value gives lower viscosity to allow a gas in the acidic gas removing agent to diffuse with ease.

Examples of compounds to be reacted with hydroxy groups in esterification, etherification, amidation, or urethanization of some or all of the hydroxy groups of a hydroxy group-containing compound include monohydric alcohols, carboxylic acids, primary amines, secondary amines, monoisocyanate compounds, and halogenated alkyls.

Preferable as the monohydric alcohol are monohydric alcohols having 1 to 30 carbon atoms, and examples thereof include linear alkyl alcohols such as methanol, ethanol, propanol, butanol, pentanol, hexanol, octanol, nonanol, decanol, undecanol, dodecanol, tridecanol, tetradecanol, pentadecanol, hexadecanol, heptadecanol, octadecanol, nonadecanol, eicosanol, heneicosanol, docosanol, tricosanol, tetracosanol, pentacosanol, hexacosanol, heptacosanol, octacosanol, nonacosanol, and triacontanol; branched alkyl alcohols such as isopropanol, isobutanol, isohexanol, 2-ethylhexanol, isononanol, isodecanol, isododecanol, isotridecanol, isotetradecanol, isotriacontanol, isohexadecanol, isoheptadecanol, isooctadecanol, isononadecanol, isoeicosanol, isoheneicosanol, isodocosanol, isotricosanol, isotetracosanol, isopentacosanol, isohexacosanol, isoheptacosanol, isooctacosanol, isononacosanol, and isopentadecanol; linear alkenyl alcohols such as tetradecenol, hexadecenol, heptadecenol, octadecenol, and nonadecenol; branched alkenyl alcohols such as isohexadecenol and isooctadecenol; cyclic alkyl alcohols such as cyclopentanol and cyclohexanol; and phenols such as phenol, benzyl alcohol, monostyrenated phenol, distyrenated phenol, and tristyrenated phenol.

Examples of the carboxylic acids include formic acid, acetic acid, propionic acid, isopropionic acid, butyric acid, isobutyric acid, pivalic acid, valeric acid, and isovaleric acid.

Preferable as the primary amine are primary amines having 2 to 24 carbon atoms, and examples thereof include ethylamine, propylamine, butylamine, pentylamine, hexylamine, heptylamine, octylamine, 2-ethylhexylamine, decylamine, dodecylamine, tridecylamine, tetradecylamine, and octadecylamine.

Examples of the secondary amines include dimethylamine, diethylamine, diisopropylamine, dioctylamine, didecylamine, and didodecylamine.

Examples of the monoisocyanate compounds include methyl isocyanate, ethyl isocyanate, phenyl isocyanate, cyclohexyl isocyanate, and benzyl isocyanate.

Examples of the halogenated alkyls include alkyl chlorides such as methyl chloride, ethyl chloride, n-propyl chloride, isopropyl chloride, n-butyl chloride, isobutyl chloride, sec-butyl chloride, and tert-butyl chloride; alkyl bromides such as methyl bromide, ethyl bromide, n-propyl bromide, isopropyl bromide, n-butyl bromide, isobutyl bromide, sec-butyl bromide, and tert-butyl bromide; and alkyl iodides such as methyl iodide, ethyl iodide, n-propyl iodide, isopropyl iodide, n-butyl iodide, isobutyl iodide, sec-butyl iodide, and tert-butyl iodide.

The acidic gas removing agent may further contain an amine compound. If the acidic gas removing agent contains an amine compound, the acidic gas removing agent can be used not only for the physical absorption method but also for the chemical absorption method.

Examples of the amine compound include primary amines such as 1,3-diaminopropane, 2-aminoethanol, 2-amino-1-propanol, 2-(2-aminoethoxy)ethanol, 4-amino-2-methyl-1-butanol, methylamine, ethylamine, n-propylamine, isopropylamine, n-butylamine, tert-butylamine, diethanolamine, 2-amino-2-methyl-1-propanol, ethylenediamine, and amino acids (alanine, glycine, glutamine, lysine); secondary amines such as isopropylaminoethanol, 2-(methylamino)ethanol, 2-(ethylamino)ethanol, 2-(butylamino)ethanol, and piperazine; tertiary amines such as triethanolamine, N-methyldiethanolamine, tetramethylethylenediamine, pentamethyldiethylenetriamine, hexamethyltriethylenetetramine, and bis(2-dimethylaminoethyl) ether; and amines such that a primary amine and a secondary amine or tertiary amine are coexisting in the same molecule such as diethylenetriamine, triethylenetetramine, tetraethylenepentamine, pentaethylenehexamine, hexaethyleneheptamine, polyethyleneimine (PEI), 1,11-bis(isopropylamino)-3,6,9-triazaundecane, tetraisopropylN,N,N',N'-tetrakis(3-aminopropyl)-1,4-butanediamine, 1,14-bis(isopropylamino)-3,6,9,12-tetraazatetradecane, 1,17-bis(isopropylamino)-3,6,9,12,15-pentaazaheptadecane, N,N'-bis(3-(isopropylamino)propyl)-1,4-butanediamine, N-(2-aminoethyl)piperazine, melamine, imidazole, and guanidine. For the amine compound, one of those may be used singly; otherwise, two or more thereof may be used in combination.

The total content ratio of the one or more compounds selected from the group consisting of a hydroxy group-containing compound and a derivative of such a hydroxy group-containing compound in the acidic gas removing agent of the present invention can be appropriately set according to the mode of usage, but is preferably 1 to 100% by mass, and, for cost-benefit performance, more preferably 5 to 100% by mass, and even more preferably 5 to 95% by mass. If the acidic gas removing agent contains an amine compound, the amine compound content of the acidic gas removing agent is preferably 10 to 50% by mass and more preferably 20 to 40% by mass for cost-benefit performance.

An additive such as a defoamer, a dispersion stabilizer, a surfactant, a viscosity modifier, and a corrosion inhibitor can also be added into the acidic gas removing agent.

The partition coefficient of the acidic gas removing agent is preferably 0 or more, more preferably 1 to 50, and particularly preferably 1 to 40. Higher numerical values of the partition coefficient indicate higher hydrophobicity, and lower ones indicate higher hydrophilicity. Higher numerical values of the partition coefficient accompany lower compatibility with water, and partition coefficients of 0 or more allow easy separation from water and give larger amounts of carbon dioxide absorption in the presence of water, thus being preferable.

For giving a moderate diffusion coefficient to a gas in the acidic gas removing agent, the viscosity of the acidic gas removing agent is preferably 1 to 20,000 mPa·s, more preferably 2 to 15,000 mPa·s, and particularly preferably 50 to 5,000 mPa·s.

If the carbon dioxide absorption ratio of the acidic gas removing agent is 65% or more, preferably 75% or more, it can be said that carbon dioxide has been well removed. For some unknown reasons, the coexistence of water results in larger amounts of carbon dioxide absorption, and even carbon dioxide absorption ratios over 100% occasionally result. The carbon dioxide absorption ratio is preferably 65 to 120%, and more preferably 75 to 115%.

The acidic gas removing agent of the present invention has a high numerical value of the partition coefficient and low compatibility with water, thus being less likely to give reduced amounts of carbon dioxide absorption in the coexistence of water than in the case that water is not coexisting. Accordingly, with the acidic gas removing agent of the present invention, the variation in amounts of carbon dioxide absorption depending on the presence or absence of coexistence of water is reduced and higher carbon dioxide absorption ratios are given. For an acidic gas removing agent having a low numerical value of the partition coefficient and well compatible with water, on the other hand, it is expected that the number of adsorption sites for carbon dioxide in the acidic gas removing agent is reduced through hydration, and reduced amounts of carbon dioxide absorption are given in the coexistence of water, resulting in lowered carbon dioxide absorption ratios. Acidic gas removing agents well compatible with water are likely to show large variation in carbon dioxide absorption ratios because of the presence or absence of the coexistence of water. Smaller variation in carbon dioxide absorption ratios allows absorption of constant amounts of carbon dioxide without being affected by the amount of coexisting water, thus making it easier to control carbon dioxide removal processes.

Carbon dioxide absorption ratios are calculated by a method described later.

[Acidic gas removing method]

The acidic gas removing method of the present invention may be, for example, a method of adding the acidic gas removing agent of the present invention into an acidic gas containing carbon dioxide, or a method of continuously removing an acidic gas containing carbon dioxide by circulating the acidic gas in a container packed with the acidic gas removing agent of the present invention, or a method of removing an acidic gas containing carbon dioxide in a batch process by filling a container packed with the acidic gas removing agent of the present invention with the acidic gas. To increase the contacting efficiency of the acidic gas removing agent of the present invention and an acidic gas containing carbon dioxide, the acidic gas removing agent and the acidic gas containing carbon dioxide may be brought into contact by using a porous plate, a bubble cap tray, or the like in a packed tower, or brought into contact by circulating the acidic gas containing carbon dioxide while the acidic gas removing agent is sprayed, or brought into contact in such a manner that fine bubbles are formed with the acidic gas containing carbon dioxide and the bubbles are brought into contact with the acidic gas removing agent of the present invention.

In the method for removing carbon dioxide with use of the acidic gas removing agent of the present invention, the acidic gas removing agent is added in such a manner that the total amount of the one or more compounds selected from the group consisting of a hydroxy group-containing compound and a derivative of a hydroxy group-containing compound, which are contained in the acidic gas removing agent of the present invention, preferably reaches 0.01 to 100 mol, more preferably reaches 0.1 to 10 mol per 1 mol of carbon dioxide in a gas. In the method of processing by circulating a gas in a container packed with the acidic gas removing agent, the amount of the acidic gas removing agent to be added is adjusted so that the total loading of the one or more compounds selected from the group consisting of a hydroxy group-containing compound and a derivative of a hydroxy group-containing compound per 1 mol of carbon dioxide in a gas to be circulated can fall within the range.

The temperature in processing by bringing the acidic gas removing agent into contact with a gas is in the range preferably of 0 to 200°C, more preferably of 25 to 60°C. The pressure in performing the processing is in the range preferably of 0.7 to 7.0 MPa, more preferably of 1.0 to 4.0 MPa.

The gas to be treated is an acidic gas containing carbon dioxide, and may further contain hydrogen sulfide or the like as another acidic gas, and nitrogen, oxygen, hydrogen, water, and so on. The acidic gas removing agent of the present invention exerts favorable carbon dioxide removal effect for gases containing nitrogen, and exerts favorable carbon dioxide removal effect even in the case that water is further contained in the gas to be processed. If nitrogen is contained in the gas to be processed, the nitrogen content is preferably 10 to 90 vol%, and more preferably 15 to 80 vol% for favorable carbon dioxide removal effect. If water is contained in the gas to be processed, the water content as liquid is preferably 0.5 to 20 vol%, and more preferably 1 to 15 vol% for favorable carbon dioxide removal effect.

The acidic gas removing method of the present invention can be carried out by means of, for example, passing a gas through an absorption device packed with the acidic gas removing agent of the present invention. The absorption device to be used can be a cleaning device that is commonly used in gas cleaning processes. Examples of the gas cleaning device include a tower with random packing or ordered packing, a tower with trays, a membrane contactor, a radial-flow scrubber, a jet scrubber, a Venturi scrubber, and a rotary-spray scrubber.

Examples

Hereinafter, the present invention will be described in more detail with reference to Examples; however, the present invention is not limited to those Examples.

[Evaluation methods and measurement methods]

<Number-average molecular weight>

The number-average molecular weight of each hydroxy group-containing compound was a molecular weight in terms of hydroxyl value calculated from the expression 56,100 / (hydroxyl value of hydroxy group-containing compound) $\times$ (number of terminal groups in hydroxy group-containing compound), wherein the hydroxyl value was determined in accordance with JIS K 1557-1:2007.
The number-average molecular weight of each derivative of a hydroxy group-containing compound was measured through gel permeation chromatography (GPC) under the following measurement conditions.

(Measurement conditions)

-  Apparatus used: "HLC-8320GPC", manufactured by Tosoh Corporation
-  Columns used: the following two types of columns connected in series in order were used.

     "TSKgel (R) SuperHZ4000", manufactured by Tosoh Corporation, two columns
     "TSKgel (R) SuperHZ2500", manufactured by Tosoh Corporation, two columns

-  Column temperature: 40°C
-  Detector: differential refractive index (RI) detector
-  Eluent: tetrahydrofuran
-  Flow rate :0.35 mL/min
-  Sample concentration: 0.5% by mass
-  Sample injection volume: 20 $\mu$L
-  Standards: polystyrene

<Evaluation of compatibility with water>

A test liquid described later and water were mixed at a wight ratio of 9:1, and the compatibility between the test liquid and water (separation or dissolution) at 25°C was checked by visual observation.

<Carbon dioxide absorption ratio>

Carbon dioxide absorption ratios were determined with the following procedures of (i) to (iv).

(i) Measurement of carbon dioxide concentration

A stirrer bar was placed in a 500-mL (capacity: 650 mL) three-necked flask equipped with a thermometer and a stirrer, a three-way stopcock, a septum, and a carbon dioxide meter (M170, Vaisala) were set on the three necks, and the temperature was adjusted to 40°C while stirring was performed at 300 rpm. From the three-way stopcock, mixed gas of carbon dioxide/nitrogen = 20 vol%/80 vol% (YOKOHAMA CHEMICAL Co., Ltd.) was fed and circulated in the three-necked flask at a flow rate of 1.3 L/min. After confirming that the carbon dioxide concentration had reached approximately 20 vol% with the carbon dioxide meter, the three-way stopcock and the valve for the mixed gas were closed. The carbon dioxide concentration was recorded every minute, and after 1 hour the stabilization of the carbon dioxide concentration was confirmed. Subsequently, a 10-mL portion was measured and taken out from a test liquid described later using a syringe, and injected into the three-necked flask from the septum via a needle. After the test liquid was injected, the carbon dioxide concentration was recorded every minute for 2 hours.

(ii) Measurement of carbon dioxide concentration under coexistence of water

A three-necked flask was set in the same manner as in (i), and the carbon dioxide concentration therein was stabilized by the same operations as in (i). In the case that a test liquid described later dissolved in (did not separate from) water in the evaluation of compatibility with water, 1 mL of water and 9 mL of the test liquid were mixed in advance, and injected into the three-necked flask. In the case that a test liquid described later separated from water in the evaluation of compatibility with water, 1 mL of water was injected into the three-necked flask first, and immediately thereafter 9 mL of the test liquid was injected thereinto. Other operations were performed in the same manner as in (i), and the carbon dioxide concentration after injection of the test liquid was recorded.

(iii) Calculation of amount of carbon dioxide absorption (a) and amount of carbon dioxide absorption in coexistence of water (b)

Amounts of carbon dioxide absorption were calculated from calculation formula (1) below with measurement of reductions of carbon dioxide concentration. Carbon dioxide was assumed to be an ideal gas and obey Henry's law. A value given by calculation formula (1) below was multiplied by 35, and the resultant was regarded as the amount of absorption at 3.5 MPa. The amount of absorption was further divided by 0.01 (L) for normalization to give the amount of absorption per 1 L of absorbing solution ($CO_2$ g/sol. L). In measurement of carbon dioxide concentration in the coexistence of water, 1 mL of water and 9 mL of a test liquid were combined to give 10 mL (= 0.01 L) of absorbing solution, from which the amount of absorption was determined.

Amount of carbon dioxide absorption

$$(g) = n \times 1 \ (atm) \times 0.65(L) \times s/RT \cdots (1)$$

wherein

s: reduction of carbon dioxide concentration = initial carbon dioxide concentration (vol%) - carbon dioxide concentration (vol%) after 2 hours
R: gas constant = 0.082 ($atm \cdot L \cdot K^{-1} \cdot mol^{-1}$)
T: temperature = 296 (K) (= 23°C)
n: molar mass of carbon dioxide = 44 ($g \cdot mol^{-1}$)

(iv) Calculation of carbon dioxide absorption ratio

With the amount of carbon dioxide absorption (a) and the amount of carbon dioxide absorption in the coexistence of water (b), the carbon dioxide absorption ratio (%) was calculated from (b)/(a) $\times$ 100.

<Viscosity>

In accordance with JIS K1557-5:2007, the viscosity (unit: mPa·s) of a test liquid (polymer) at 25°C was measured with an E-type viscometer.

<Partition coefficient>

The partition coefficients of polypropylene glycols (PPGs) (Examples 3 to 7) whose number-average molecular weights ranging from 3,200 to 18,000 were determined through extrapolation of values calculated for the partition coefficients of PPGs having number-average molecular weights of 400, 700, 1,000, and 2,000 by using ChemDraw Professional Ver. 17.1 software package. The partition coefficients of other polymers and compounds are calculated values given by ChemDraw Professional Ver. 17.1 software package.

[Method for synthesizing polymer]

<Synthesis Example 1>

With use of 1,000 g of propylene glycol as an initiator, 12,158 g of propylene oxide was polymerized in the presence of potassium hydroxide, and subsequent neutralization and removal of a salt resulting from the neutralization gave bifunctional PPG having a number-average molecular weight of 1,000 (polymer A1).

<Synthesis Example 2>

With use of 1,000 g of bifunctional PPG as an initiator, which had a number-average molecular weight of 400, and had been obtained through ring-opening polymerization of propylene oxide with propylene glycol, 4,000 g of propylene oxide was polymerized in the presence of potassium hydroxide, and subsequent neutralization and removal of a salt resulting from the neutralization gave bifunctional PPG having a number-average molecular weight of 2,000 (polymer A2).

<Synthesis Example 3>

With use of 1,000 g of bifunctional PPG as an initiator, which had a number-average molecular weight of 400, and had been obtained through ring-opening polymerization of propylene oxide with propylene glycol, 7,000 g of propylene oxide was polymerized in the presence of potassium hydroxide, and subsequent neutralization and removal of a salt resulting from the neutralization gave bifunctional PPG having a number-average molecular weight of 3,200 (polymer A3).

<Synthesis Example 4>

With use of 700 g of bifunctional PPG as an initiator, which had a number-average molecular weight of 700, and had been obtained through ring-opening polymerization of propylene oxide with propylene glycol, 3,300 g of propylene oxide was polymerized in the presence of a zinc hexacyanocobaltate complex with ligands of t-butyl alcohol to give bifunctional PPG having a number-average molecular weight of 4,000 (polymer A4).

<Synthesis Example 5>

With use of 1,000 g of bifunctional PPG as an initiator, which had a number-average molecular weight of 1,000, and had been obtained through ring-opening polymerization of propylene oxide with propylene glycol, 7,000 g of propylene oxide was polymerized in the presence of a zinc hexacyanocobaltate complex with ligands of t-butyl alcohol to give bifunctional PPG having a number-average molecular weight of 8,000 (polymer A5).

<Synthesis Example 6>

With use of 2,000 g of bifunctional PPG as an initiator, which had a number-average molecular weight of 2,000, and had been obtained through ring-opening polymerization of propylene oxide with propylene glycol, 13,000 g of propylene oxide was polymerized in the presence of a zinc hexacyanocobaltate complex with ligands of t-butyl alcohol to give bifunctional PPG having a number-average molecular weight of 15,000 (polymer A6).

<Synthesis Example 7>

With use of 2,000 g of bifunctional PPG as an initiator, which had a number-average molecular weight of 2,000, and had been obtained through ring-opening polymerization of propylene oxide with propylene glycol, 16,000 g of propylene oxide was polymerized in the presence of a zinc hexacyanocobaltate complex with ligands of t-butyl alcohol to give bifunctional PPG having a number-average molecular weight of 18,000 (polymer A7).

<Synthesis Example 8>

With use of 400 g of polyoxypropylene monool having a number-average molecular weight of 400, which had been obtained through ring-opening polymerization of propylene oxide with methanol and potassium hydroxide, 800 g of a mixed product of propylene oxide and ethylene oxide was polymerized in the presence of potassium hydroxide to give monofunctional polyoxyalkylene monool having a number-average molecular weight of 1,800. To 1,200 g of the resulting polyoxyalkylene monool, 40 g of sodium hydroxide and 100 g of methanol were added, and the methanol was then removed to cause terminal alcoholate formation. The resultant was then reacted with 51 g of methyl chloride, and subsequent neutralization and removal of a salt resulting from the neutralization gave a methyl ether of the polyoxyalkylene monool (PPG-PEG-OMe) (polymer A8).

<Synthesis Example 9>

To 430 g of dimethyl carbonate, 270 g of 1,5-pentanediol, and 300 g of 1,6-hexanediol (1,5-pentanediol/1,6-hexanediol = 1/1 (mole ratio)), 0.10 g of titanium tetrabutoxide was added as a catalyst, and the resultant was stirred at normal pressure with heating. At a reaction temperature of 150 to 190°C and a pressure of 3.0 to 5.0 kPa, reaction was performed for 10 hours while byproducts were distilled off. Thereafter, the pressure was reduced to 0.5 kPa, and reaction was further performed at 190°C for 5 hours while byproducts were distilled off to give polycarbonate diol (PCD) having a number-average molecular weight of 1,000 (polymer A9).

<Synthesis Example 10>

A reactor was charged with 142.8 g of 3-methyl-1,5-pentanediol and 142.4 g of adipic acid, which were heated to 200°C at normal pressure under a nitrogen atmosphere, and esterification reaction was performed while water was distilled off. Next, 5 mg of titanium tetraisopropoxide was added, and the reaction was continued under reduced pressure to distill off 3-methylpentanediol. The pressure reduction was discontinued, 5 g of water was then added, and the resultant was stirred at 100°C for 2 hours. Water was distilled off under reduced pressure to give polyester polyol (PEP) having a number-average molecular weight of 2,000 (polymer A10).

<Examples 1 to 12>

Table 1 shows results of measurement and evaluation for test liquids A1 to A10 and test liquids A'1 and A'2. Polymers A1 to A10 were used as test liquids A1 to A10 of Examples 1 to 10, propylene glycol (PG) manufactured by AGC Inc. was used as test liquid A'1 of Example 11, and polyethylene glycol dimethyl ether (DMPEG) manufactured by Tokyo Chemical Industry Co., Ltd. was used as test liquid A'2 of Example 12. For PG in the column Number-average molecular weight in Table 1, the molecular weight is shown.

Examples 1 to 10 are working examples, and Examples 11 and 12 are comparative examples.

[Table 1]

| | Test liquid | Structure | Number-average molecular weight | Compatibility with water | Partition coefficient ClogP | Viscosity 25°C (mPa·s) | Amount of carbon dioxide absorption (a) ($CO_2$ g/sol. L) | Amount of carbon dioxide absorption under coexistence of water (b) ($CO_2$ g/sol. L) | Carbon dioxide absorption ratio (%) |
|---|---|---|---|---|---|---|---|---|---|
| Example 1 | A1 | PPG | 1,000 | separated | 1.3 | 150 | 19.7 | 20.5 | 104.1 |
| Example 2 | A2 | PPG | 2,000 | separated | 3.6 | 310 | 18.5 | 16.0 | 86.6 |
| Example 3 | A3 | PPG | 3,200 | separated | 6.3 | 580 | 20.0 | 16.0 | 79.9 |
| Example 4 | A4 | PPG | 4,000 | separated | 8.1 | 875 | 15.3 | 13.6 | 88.8 |
| Example 5 | A5 | PPG | 8,000 | separated | 17.3 | 3,000 | 15.6 | 12.7 | 81.5 |
| Example 6 | A6 | PPG | 15,000 | separated | 33.4 | 12,000 | 18.2 | 16.8 | 92.2 |
| Example 7 | A7 | PPG | 18,000 | separated | 40.3 | 20,000 | 16.8 | 13.2 | 78.6 |
| Example 8 | A8 | PPG-PEG-OMe | 1,800 | separated | 1.4 | 85 | 22.4 | 18.3 | 81.8 |
| Example 9 | A9 | PCD | 1,000 | separated | 8.6 | 7,900 | 17.2 | 18.0 | 105.0 |
| Example 10 | A10 | PEP | 2,000 | separated | 18.2 | 5,220 | 16.4 | 18.3 | 111.8 |
| Example 11 | A'1 | PG | 76 | dissolved | -1.1 | 56 | 6.0 | 3.3 | 55.2 |
| Example 12 | A'2 | DMPEG | 240 | dissolved | -1.0 | 1 | 29.7 | 18.0 | 60.6 |

The acidic gas removing agents each containing a hydroxy group-containing compound having a number-average molecular weight of 500 or more or a derivative of such a hydroxy group-containing compound had a partition coefficient of 0 or more, did not dissolve in water, and the amount of carbon dioxide absorption was unlikely to decrease in the coexistence of water, and the carbon dioxide absorption ratios were high. In contrast to the cases with an acidic gas removing agent containing a hydroxy group-containing compound having a number-average molecular weight of less than 500, use of an acidic gas removing agent containing a hydroxy group-containing compound having a number-average molecular weight of 500 or more or a derivative of such a hydroxy group-containing compound allowed the amount of carbon dioxide absorption to be maintained even when water was coexisting, and resulted in smaller variation in amounts of carbon dioxide absorption.

**Claims**

1. An acidic gas removing agent for removing carbon dioxide in a gas, the acidic gas removing agent comprising one or more selected from the group consisting of a hydroxy group-containing compound having a number-average molecular weight of 500 or more and a derivative of the hydroxy group-containing compound.

2. The acidic gas removing agent according to claim 1, wherein the hydroxy group-containing compound and the derivative of the hydroxy group-containing compound each have a number-average molecular weight of 500 to 30,000.

3. The acidic gas removing agent according to claim 1 or 2, wherein the hydroxy group-containing compound is polyether monool, polyether polyol, polyester polyol, or polycarbonate diol.

4. The acidic gas removing agent according to any one of claims 1 to 3, having a partition coefficient of 0 or more.

5. The acidic gas removing agent according to any one of claims 1 to 4, wherein the gas comprises nitrogen.

6. The acidic gas removing agent according to any one of claims 1 to 5, wherein the gas comprises water.

7. An acidic gas removing method, wherein the acidic gas removing agent according to any one of claims 1 to 6 is brought into contact with the gas to remove carbon dioxide in the gas.

8. The acidic gas removing method according to claim 7, wherein the acidic gas removing agent is brought into contact with the gas at a temperature ranging from 0 to 200°C.

9. The acidic gas removing method according to claim 7 or 8, wherein the acidic gas removing agent is brought into contact with the gas at a pressure ranging from 0.7 to 7.0 MPa.

10. An absorption device packed with the acidic gas removing agent according to any one of claims 1 to 6.

11. An acidic gas cleaning device provided with the absorption device according to claim 10.

## INTERNATIONAL SEARCH REPORT

| International application No. |
| --- |
| **PCT/JP2022/033938** |

**A.  CLASSIFICATION OF SUBJECT MATTER**

*B01D 53/14*(2006.01)i; *B01D 53/18*(2006.01)i; *B01D 53/62*(2006.01)i; *B01D 53/78*(2006.01)i; *C08G 63/12*(2006.01)i; *C08G 64/00*(2006.01)i; *C08G 65/04*(2006.01)i; *C08G 65/08*(2006.01)i

FI:    B01D53/14 210; B01D53/18 130; B01D53/62; B01D53/78; C08G63/12; C08G64/00; C08G65/04 ZAB; C08G65/08

According to International Patent Classification (IPC) or to both national classification and IPC

**B.  FIELDS SEARCHED**

Minimum documentation searched (classification system followed by classification symbols)

B01D53/14; B01D53/18; B01D53/62; B01D53/78; C08G63/12; C08G64/00; C08G65/04; C08G65/08; C01B32/50

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C.  DOCUMENTS CONSIDERED TO BE RELEVANT**

| Category* | Citation of document, with indication, where appropriate, of the relevant passages | Relevant to claim No. |
| --- | --- | --- |
| X | US 2019/0143260 A1 (NOVEK, Ethan J.) 16 May 2019 (2019-05-16)<br>claim 1, paragraphs [0006], [0031], [0061], [0604]-[0609], [0695], [0718], fig. 1A | 1-11 |
| A | US 2018/0043300 A1 (NRGTEK, INC.) 15 February 2018 (2018-02-15)<br>entire text, all drawings | 1-11 |
| A | JP 2010-248052 A (NATIONAL INSTITUTE OF ADVANCED INDUSTRIAL SCIENCE& TECHNOLOGY) 04 November 2010 (2010-11-04)<br>entire text, all drawings | 1-11 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 October 2022** | **18 October 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/033938**

| Patent document cited in search report | | | Publication date (day/month/year) | Patent family member(s) | | | Publication date (day/month/year) |
|---|---|---|---|---|---|---|---|
| US | 2019/0143260 | A1 | 16 May 2019 | US | 2017/0267538 | A1 | |
| | | | | US | 2016/0167974 | A1 | |
| | | | | US | 2021/0001267 | A1 | |
| | | | | US | 2020/0188840 | A1 | |
| | | | | US | 2021/0205754 | A1 | |
| | | | | US | 2020/0368676 | A1 | |
| | | | | US | 2017/0267539 | A1 | |
| | | | | WO | 2016/094498 | A1 | |
| | | | | WO | 2021/167817 | A1 | |
| | | | | WO | 2017/136728 | A1 | |
| | | | | EP | 3229942 | A1 | |
| | | | | EP | 3411139 | A1 | |
| | | | | CN | 107530632 | A | |
| | | | | CN | 109070047 | A | |
| US | 2018/0043300 | A1 | 15 February 2018 | US | 9782719 | B1 | |
| | | | | US | 2017/0326499 | A1 | |
| | | | | US | 2018/0043308 | A1 | |
| | | | | WO | 2018/031297 | A1 | |
| | | | | WO | 2018/057423 | A1 | |
| JP | 2010-248052 | A | 04 November 2010 | (Family: none) | | | |

Form PCT/ISA/210 (patent family annex) (January 2015)

# EP 4 417 296 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 59216831 A
- WO 2003062301 A
- WO 2004067633 A
- JP 2004269776 A
- JP 2005015786 A
- WO 2013065802 A
- JP 2015010162 A
- JP 2012077280 A
- JP 2014080590 A
- JP 2015091937 A
- JP 2001270938 A
- JP 2010126591 A
- JP H02289616 A
- JP H4239023 A